# EUROPÄISCHE PATENTSCHRIFT

(11) **EP 0 820 581 B1**
(45) Veröffentlichungstag und Bekanntmachung des Hinweises auf die Patenterteilung: **07.03.2001**
(21) Anmeldenummer: 96907321.2
(22) Anmeldetag: 01.04.1996
(51) Int. Cl.: G01L 9/00

(54) **VERFAHREN ZUR HERSTELLUNG EINES HALBLEITERCHIPS**
METHOD OF PRODUCING A SEMICONDUCTOR CHIP
METHODE POUR PRODUIRE UNE PUCE A SEMI-CONDUCTEUR

(30) Priorität: 12.04.1995 DE 19513921
(43) Veröffentlichungstag der Anmeldung: 28.01.1998
(73) Patentinhaber: Infineon Technologies AG, 81669 München (DE)
(72) Erfinder: NÄHER, Ulrich, D-80803 München (DE); BERTHOLD, Adrian, D-80339 München (DE); SCHEITER, Thomas, D-80469 München (DE); HIEROLD, Christofer, D-81379 München (DE)
(74) Vertreter: Zedlitz, Peter, Dipl.-Inf.
(86) Internationale Anmeldenummer: DE9600575
(87) Internationale Veröffentlichungsnummer: WO9632627

(56) Entgegenhaltungen:
- EP-A- 0 306 178
- EP-A- 0 506 491
- US-A- 4 256 382

## Beschreibung

In der Halbleitertechnologie, insbesondere bei der Herstellung von Sensoren und Aktuatoren ist es oftmals erforderlich, eine schichtartige Struktur frei über einem Substrat herzustellen. Eine derartige Struktur kann z. B. als Membran für Drucksensoren, als Verschlußschicht eines Hohlraumes oder als obere Gegenelektrode für kapazitive Sensoren oder Aktuatoren eingesetzt werden. Für eine solche Membran kann z. B. eine dünne Aluminiumschicht verwendet werden, wie sie im Rahmen eines CMOS-Prozesses als Metallisierungsebene aufgebracht wird. Eine solche Metallschicht liefert eine elektrisch leitende Membran, die nach dem Entfernen des darunter befindlichen Materiales z. B. als Gegenelektrode oder als Druckmembran für kapazitive Messung dienen kann. Wegen der mechanischen Stabilität kann eine Metallschicht auch vorteilhaft verwendet werden, wenn ein Hohlraum, in dem sich ein mikromechanisches Element bewegt, nach außen abgedeckt werden soll, wie das z. B. bei dem Bauelement der deutschen Patentanmeldung DE 19509868 beschrieben ist. In der Metallisierung tritt in der Regel eine hohe thermisch bedingte Zugspannung (Stress) auf, die die mechanische Stabilität einer Membranschicht, die nicht ganzflächig abgestützt wird, beeinträchtigt.

In der EP 0 306 178 A2 ist anhand der Figur 9 ein Beschleunigungssensor beschrieben, bei dem ein vertikal an einem Siliziumsubstrat seitlich auslenkbar angebrachter und mit einem Magneten versehener Balken als träge Masse vorhanden ist. Die Bewegungen des Balkens werden durch magnetoresistive Sensorelemente erfaßt, die an einem zweiten Substrat angebracht sind. Die beiden Substrate sind mittels Stützen im Abstand zueinander gehalten, so daß dazwischen ein für die Auslenkungen des Balkens ausreichend großer Hohlraum frei ist.

Aufgabe der vorliegenden Erfindung ist es, ein Verfahren zur Herstellung einer membranartigen Struktur mit ausreichender mechanischer Stabilität auf einem Halbleiterchip anzugeben.

Diese Aufgabe wird mit dem Verfahren mit den Merkmalen des Anspruches 1 gelöst. Ausgestaltungen ergeben sich aus den abhängigen Ansprüchen.

Die grundlegende Idee der Erfindung besteht darin, die Membranschicht auf pfeilerartigen oder stegartigen Stützen zu befestigen und diese Stützen in festem Material bis zu einer gewissen Tiefe derart zu verankern, daß auch beim Auftreten von Verspannungen in der Membranschicht die Abstützungen fest auf dem Untergrund gehalten werden. Zwischen der Membran und einem Substrat, einer Halbleiterschichtstruktur oder dergleichen befinden sich die Stützen, die die Membran in einem Abstand von dem Substrat halten, so daß auf der dem Substrat oder der Halbleiterschichtstruktur zugewandten Seite der Membran eine freie Oberfläche der Membranschicht vorhanden sein kann. Diese freie Oberfläche kann z. B. durch einen zwischen dem Substrat und der Membran hergestellten Hohlraum gebildet werden. Es ist auch möglich, daß die Membranschicht völlig außerhalb des übrigen Halbleitermateriales nur von Stützen getragen wird. In diesem Fall ist die Membran zumindest auf der dem Substrat zugewandten Seite völlig frei von weiterem festen Material. Wesentlich ist, daß die die Membranschicht tragenden pfeilerartigen oder stegartigen Stützen mit ihren der Membran gegenüberliegenden Enden bis zu einer gewissen Tiefe in dem festen Material des Substrates oder der darauf befindlichen Schichtstruktur verankert sind. Vorteilhaft dafür ist es, wenn die Stützen an diesen Enden seitliche Begrenzungsflächen aufweisen, die zumindest teilweise zur Ebene der Membranschicht senkrecht verlaufen. Mit einem solchen senkrecht begrenzten Anteil kann die Stütze in dem festen Material besonders fest verankert sein. Bei zylindrischen Stützen kann das der Membran gegenüberliegende Ende z. B. wenige um in das Halbleitermaterial hineinreichen.

Es folgt eine genauere Beschreibung der Erfindung anhand der Figuren 1 bis 4.
- Figur 1: zeigt einen erfindungsgemäß hergestellten Halbleiterchip im Schema im Querschnitt.
- Figuren 2 und 3: zeigen Zwischenprodukte des Halbleiterchips nach verschiedenen Stufen der Herstellung im Querschnitt.
- Figur 4: zeigt eine andere Ausführungsform eines erfindungsgemäß hergestellten Chips in einer schrägen Aufsicht.

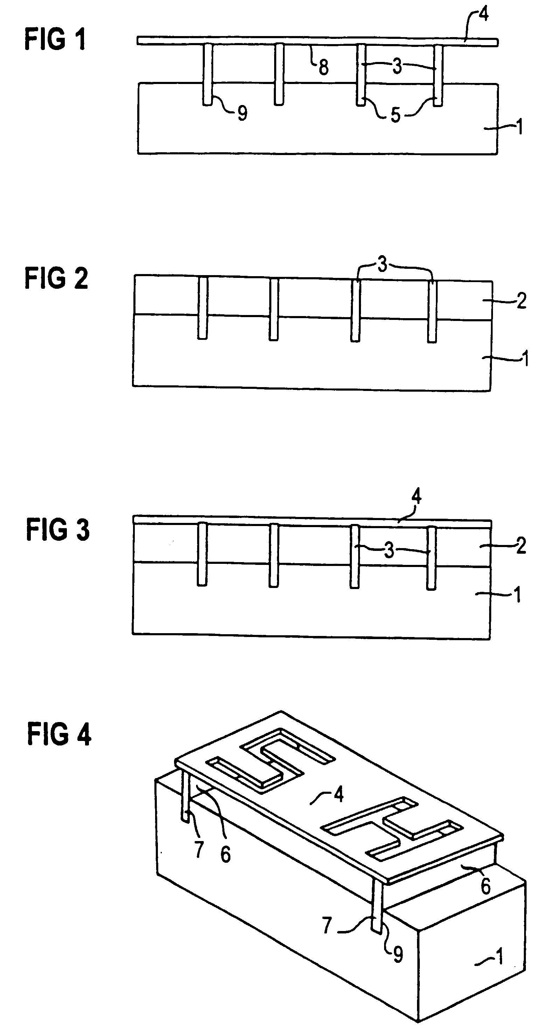

Figur 1 zeigt ein Substrat 1, das der Einfachheit halber strukturlos gezeichnet ist, aber bei verschiedenen Ausführungsformen ein Substrat, eine Halbleiterschichtstruktur oder der obere Anteil eines mit Halbleiterschichten überwachsenen oder mit dielektrischen oder metallischen Schichten versehenes Substrates sein kann. Die im folgenden als Membran 4 bezeichnete Schicht, die unterschiedliche Dicken aufweisen kann und als Membran, Schutzschicht, Gegenelektrode oder dergleichen ausgebildet und aus verschiedenen Materialien wie z. B. Metall, Halbleitermaterial oder Dielektrikum sein kann, befindet sich in einem Abstand zu diesem Substrat 1 und wird durch die Stützen 3 in diesem Abstand gehalten. Zwischen dem Substrat 1 und der Membran 4 befindet sich in diesem Beispiel ein Hohlraum. Die dem Substrat 1 zugewandte Oberfläche 8 der Membranschicht 4 ist also in diesem Beispiel mit Ausnahme der Stellen, an denen die Stützen 3 angreifen, völlig frei. Diese Stützen 3, die man sich z. B. als zylindrische Säulen vorstellen kann, sind mit ihrem von der Membran 4 abgewandten Ende 5 in dem Material des Substrates 1 verankert.

In dem Substrat 1 sind in diesem Beispiel etwa zylindrische Öffnungen, die typischerweise einen Durchmesser von z. B. etwa 1 µm und eine Tiefe zwischen z. B. 0,5 µm und 5 µm besitzen können, ausgeätzt und mit dem Material der Stützen aufgefüllt. Die Stützen 3 sind z. B. aus Metall oder Polysilizium. Vorteilhaft ist es, wenn die verankerten Enden 5 der Stützen 3, in der Ausrichtung der durch die Membran 4 gegebenen Ebene gesehen, seitliche Berandungsflächen 9 aufweisen, die zu der Ebene der Membran 4 im wesentlichen senkrecht verlaufen. Es sollte also in den Berandungsflächen 9 mindestens eine Strecke liegen, die zu der Ebene der Membran 4 senkrecht verläuft. Das der Membran gegenüberliegende Ende der in diesem Beispiel zylindrischen Stützen kann z. B. zylindrisch sein. Stegförmige Stützen, die etwa einer senkrechten Schicht entsprechen, können mit quaderförmigen Anteilen in dem festen Material des Substrates 1 verankert sein. Im Prinzip ist es auch möglich, wenn zylindrische Stützen z. B. mit einem etwa halbkugelförmigen Abschluß des in dem Substrat verankerten Ende versehen sind und nur dieser halbkugelförmige Abschluß in dem festen Material verankert ist. Die senkrecht zur Membran gemessene Abmessung der im Substrat 1 verankerten Enden 5 der Stützen hängt von der vorgesehenen mechanischen Beanspruchung der Stützen ab.

Die Herstellung dieser Struktur erfolgt z. B., indem zunächst ganzflächig auf das Substrat 1 entsprechend Figur 2 eine Hilfsschicht 2 aufgebracht wird. Diese Hilfsschicht 2 wird aus einem Material hergestellt, das selektiv bezüglich des Materials des Substrates 1 und des für die Stützen und die Membranschicht vorgesehenen Materiales entfernt werden kann. Bei einem Siliziumsubstrat kann diese Hilfsschicht 2 z. B. Siliziumoxid oder ein anderes Dielektrikum sein. In diese Schicht werden z. B. mittels eines Trockenätzverfahrens die für die Stützen vorgesehenen Bereiche ausgeätzt. Diese ausgeätzten Öffnungen können z. B. in der Form von Kontaktlöchern hergestellt werden, wie sie auch für die Anschlußkontakte im Rahmen eines CMOS-Prozesses geätzt werden. Im Unterschied zu der herkömmlichen Kontaktlochätzung werden die für die Stützen vorgesehenen Öffnungen bis in das Material des Substrates 1 oder der Schichtstruktur weitergeätzt. Die Tiefe dieser Ätzung unterhalb der Hilfsschicht 2 wird vorteilhaft z. B. zwischen 0,5 µm und etwa 5 µm gewählt. Erfindungsgemäß ist die Tiefe dieser Ätzung nicht festgelegt; eine tiefere Ätzung als etwa 5 um in das Substrat 1 hinein verbessert aber die Stabilität der herzustellenden Stützen nicht wesentlich. Für geforderte größere mechanische Stabilität ist eine Tiefe der Verankerung der Stützen von mindestens 1,5 µm vorteilhaft.

Die geätzten Löcher werden dann mit dem für die Stützen 3 vorgesehenen Material aufgefüllt. Dazu kann eine von dem CMOS-Prozeß her bekannte Füllung von Kontaktlöchern verwendet werden. Es wird z. B. zunächst eine Ti/TiN-Barriere hergestellt, die als Haftschicht dient und verhindern soll, daß das Metall der Stützen mit dem Halbleitermaterial legiert, d. h. z. B. das Metall in das Halbleitermaterial ausdiffundiert. Anschließend werden die Löcher mit dem Metall der Stützen, z. B. Wolfram, aufgefüllt. Bei Bedarf wird dieses Metall soweit rückgeätzt, daß es wie in Figur 2 gezeichnet eben mit der Oberseite der Hilfsschicht 2 abschließt. Dann wird ganzflächig entsprechend Figur 3 die für die Membran 4 vorgesehene Schicht abgeschieden und ggf. strukturiert. Es kann sich dabei z. B. um die erste Metallisierungsebene handeln, die z. B. Aluminium oder Wolfram sein kann. Um das Material der Hilfsschicht 2 entfernen zu können, werden in die Membran 4 Ätzlöcher-gebohrt, die zahlreich sind und z. B. einen Durchmesser von etwa 1 um haben. Durch diese Ätzlöcher hindurch wird die Hilfsschicht 2 in einem vorwiegend isotropen Ätzschritt entfernt, wobei im Falle einer Oxidschicht z. B. ein Ätzmittel, das Fluorwasserstoff (HF, Flußsäure) enthält, verwendet werden kann. Damit ergibt sich die in Figur 1 dargestellte Struktur.

Auf diese Weise ist es möglich, die Membran 4 mittels Stützen 3 fest in dem festen Material des Substrates 1 zu verankern. Die verankerten Strukturen lassen sich, auch wenn sie ganz oder fast vollständig freigeätzt werden, auch durch starke mechanische Beanspruchung nicht mehr von dem Substrat lösen.

Ein elektrischer Anschluß einer leitend hergestellten Membran 4 kann durch elektrisch leitende Stützen 3 erfolgen. Wird ein solcher leitender Kontakt zwischen der Stütze und einem Bereich im Substrat 1 gewünscht, kann die zwischen der Stütze und dem Substrat vorgesehene Barriere z. B. kollimiert gesputtert werden (z. B. im Fall von Titan) oder in einem CVD-Prozeß (Chemical Vapor Deposition) abgeschieden werden (z. B. im Fall von TiN). Für gute mechanische Haftung der Stützen in dem festen Material des Substrates ist es ausreichend, wenn das Ätzloch in der Hilfsschicht 2 ohne vorherige Herstellung einer Barriereschicht mit Metall aufgefüllt wird. Eine elektrische Isolation gegenüber dem umgebenden Halbleitermaterial kann z. B. mit einem pn-Übergang im Bereich der Enden 5 der Stützen 3 erreicht werden. Das feste Material, in dem die Stützen 3 verankert sind, kann im Prinzip beliebig sein, wenn ausreichende Haftung und mechanische Stabilität vorhanden sind. Als obere Schicht einer Schichtstruktur 1 kommt außer Halbleitermaterial, wie z. B. kristallines Silizium oder Polysilizium, auch eine Dielektrikumschicht, z. B. aus Siliziumnitrid, in Frage. Es ist nicht erforderlich, die Membranschicht mit Ätzlöchern zu versehen, wenn die Hilfsschicht 2 z. B. von der Seite her über seitliche Ätzkanäle entfernt werden kann. Es besteht auch die Möglichkeit, Ätzlöcher in der Membran mit einer nachfolgend abgeschiedenen Schicht, z. B. aus Oxid oder Nitrid, zu verschließen. Damit erhält man eine z. B. für einen Drucksensor geeignete luftdicht abgeschlossene, nur an wenigen Stellen abgestützte Membran mit hoher mechanischer Stabilität.

Bei dem erfindungsgemäß hergestellten Halbleiterchip kann die Membran in regelmäßigen Abständen durch pfeilerartige Stützen abgestützt werden, wie das in Figur 1 dargestellt ist. Bei den Stützen 3 in Figur 1 kann es sich auch um stegartig verlaufende Stützen handeln, die im Querschnitt die in Figur 1 dargestellte Form haben. Je nach Zahl und Abmessung der Stützen kann die Membran 4 mehr oder weniger stabil abgestützt werden. Bei Verwendung dieser Schicht als obere Gegenelektrode oder als Verkapselung eines beweglich angebrachten mikromechanischen Funktionselementes werden die Stützen vorzugsweise an den Rändern der Membran angebracht sein. Das ist auch bei Verwendung als Membran eines Drucksensors vorteilhaft, damit die Membran 4 nur seitlich unterstützt ist und in der Mitte den zu messenden Druckänderungen entsprechend verformbar ist.

In Figur 4 ist eine alternative Ausführungsform des Chips dargestellt, bei der die Membran 4 rechteckig ist und nur längs der beiden Schmalseiten mit stegartig geformten Stützen 6 unterstützt ist. Die in dem Substrat 1 verankerten Anteile 7 dieser Stützen 6 sind hier quaderförmig und durch Außenflächen 9 begrenzt, die rechteckig sind und senkrecht zur Ebene der Membran 4 liegen. Um in der Membran 4 auftretende Zugkräfte zu entspannen, sind die als Beispiel eingezeichneten S-förmigen und H-förmigen Aussparungen vorhanden. Auf diese Weise ist es möglich, auch eine relativ dicke Membran 4 stabil auf wenigen dünnen Stützen zu befestigen. Wenn viele Stützen vorgesehen sind, kann die mechanische Stabilität so erhöht werden, daß die Membran 4 z. B. als Abdeckungsschicht für empfindliche Strukturen auf dem Chip verwendet werden kann. Bei der weiteren Bearbeitung oder Montage kann der Chip dann hohen mechanischen Belastungen ausgesetzt werden, weil die Abdeckungsschicht ausreichend stabil auf dem Substrat verankert ist.

## Patentansprüche

1. Verfahren zur Herstellung eines Halbleiterchips mit einer auf Stützen (3; 6) ruhenden Membran (4), bei dem in einem ersten Schritt auf ein Substrat (1), eine Halbleiterschichtstruktur oder einen oberen Anteil eines mit Halbleiterschichten überwachsenen oder mit dielektrischen oder metallischen Schichten versehenen Substrates eine Hilfsschicht (2) aus einem Material, das selektiv bezüglich des Materiales des Substrates (1) bzw. der Schichtstruktur und des für die Stützen (3; 6) und die Membran (4) vorgesehenen Materiales entfernt werden kann, aufgebracht wird,
in einem zweiten Schritt in der Hilfsschicht (2) die für die Stützen vorgesehenen Bereiche ausgeätzt werden, wobei bis in das Material des Substrates (1) oder der Schichtstruktur weitergeätzt wird,
in einem dritten Schritt die geätzten Löcher mit dem für die Stützen (3; 6) vorgesehenen Material aufgefüllt werden, in einem vierten Schritt eine für die Membran (4) vorgesehene Schicht abgeschieden und nach Bedarf strukturiert wird, in einem fünften Schritt in die Membran (4) Ätzlöcher gebohrt werden und
in einem sechsten Schritt durch diese Ätzlöcher hindurch die Hilfsschicht (2) in einem vorwiegend isotropen Ätzschritt entfernt wird.

2. Verfahren nach Anspruch 1, bei dem in dem zweiten Schritt die Tiefe der Ätzung unterhalb der Hilfsschicht (2) zwischen 0,5 µm und etwa 5 µm gewählt wird.

3. Verfahren nach Anspruch 1 oder 2, bei dem zwischen dem zweiten und dem dritten Schritt in einem ersten weiteren Schritt eine Ti/TiN-Barriere hergestellt wird.

4. Verfahren nach einem der Ansprüche 1 bis 3, bei dem in dem dritten Schritt die Löcher mit Wolfram aufgefüllt werden.

5. Verfahren nach einem der Ansprüche 1 bis 4, bei dem in dem vierten Schritt eine Metallisierungsebene aus Aluminium oder Wolfram abgeschieden wird.

## Claims

1. Method for producing a semiconductor chip with a diaphragm (4) resting on supports (3; 6), in which in a first step, an auxiliary layer (2) is applied to a substrate (1), a semiconductor layer structure or an upper portion of a substrate which is overgrown with semiconductor layers or is provided with dielectric or metallic layers, the said auxiliary layer being made of a material which can be removed selectively with respect to the material of the substrate (1) or the layer structure and the material provided for the supports (3; 6) and the diaphragm (4),
in a second step, the regions provided for the supports are etched out in the auxiliary layer (2), further etching down into the material of the substrate (1) or the layer structure being effected,
in a third step, the etched holes are filled with the material provided for the supports (3; 6),
in a fourth step, a layer provided for the diaphragm (4) is deposited and patterned as required,
in a fifth step, etching holes are bored into the diaphragm (4) and
in a sixth step, the auxiliary layer (2) is removed through these etching holes in a predominantly isotropic etching step.

2. Method according to Claim 1, in which in the second step, the depth to which etching is effected below the auxiliary layer (2) is chosen to be between 0.5 µm and about 5 µm.

3. Method according to Claim 1 or 2, in which between the second and third steps, in a first further step, a Ti/TiN barrier is produced.

4. Method according to one of Claims 1 to 3, in which
in the third step, the holes-are filled with tungsten.

5. Method according to one of Claims 1 to 4, in which
in the fourth step, a metallization plane made of aluminium or tungsten is deposited.

## Revendications

1. Procédé pour produire une puce à semi-conducteur pourvue d'une membrane (4) reposant sur des appuis (3 ; 6), dans lequel
- dans une première étape, on dépose sur un substrat (1), une structure en couches semi-conductrices ou une portion supérieure d'un substrat recouvert de couches semi-conductrices ou pourvu de couches diélectriques ou métalliques, une couche auxiliaire (2) en une matière pouvant être supprimée sélectivement par rapport à la matière du substrat (1) resp. de la structure en couches et de la matière prévue pour les appuis (3 ; 6) et la membrane (4),
- dans une deuxième étape, on grave dans la couche auxiliaire (2), les régions prévues pour les appuis et on poursuit la gravure jusqu'à pénétrer dans la matière du substrat (1) ou de la structure en couches,
- dans une troisième étape, on remplit les trous gravés avec la matière prévue pour les appuis (3 ; 6),
- dans une quatrième étape, on dépose une couche destinée à servir de membrane (4) et on la structure suivant le cas,
- dans une cinquième étape, on perce des trous de gravure dans ladite membrane (4) et
- dans une sixième étape, à travers ces trous de gravure, on supprime la couche auxiliaire (2) par gravure essentiellement isotrope.

2. Procédé selon la revendication 1, dans lequel, dans la deuxième étape, on choisit la profondeur de gravure au-dessous de la couche auxiliaire (2) entre 0,5 µm et 5 µm environ.

3. Procédé selon la revendication 1 ou 2, dans lequel, entre la deuxième et la troisième étape, on réalise dans une première étape supplémentaire, une barrière de Ti/TiN.

4. Procédé selon l'une des revendications 1 à 3, dans lequel, dans la troisième étape, on remplit les trous de tungstène.

5. Procédé selon l'une des revendications 1 à 4, dans lequel, dans la quatrième étape, on dépose une couche métallisée en aluminium ou tungstène.
